# FASCICULE DE BREVET EUROPEEN

(11) **EP 2 718 361 B1**
(45) Date de publication et mention de la délivrance du brevet: **04.10.2023**
(21) Numéro de dépôt: 12731130.6
(22) Date de dépôt: 11.06.2012
(51) Int. Cl.: C08L 1/02, C08L 3/02, C08L 97/02, C08L 99/00, E04B 1/74, D04H 1/425

(54) **MATERIAU DE PROTECTION ET/OU DE COMBUSTION A PARTIR D'UNE MATIERE VEGETALE CELLULOSIQUE ET PROCEDE DE FABRICATION CORRESPONDANT**
SCHUTZ-UND/ODER BRENNMATERIAL AUS CELLULOSEHALTIGEM PFLANZLICHEN MATERIAL UND ENTSPRECHENDES VERFAHREN ZU DESSEN HERSTELLUNG
PROTECTIVE AND/OR COMBUSTIBLE MATERIAL MADE FROM CELLULOSIC PLANT MATERIAL, AND CORRESPONDING METHOD FOR MANUFACTURING SAME

(30) Priorité: 09.06.2011 FR 1155074
(43) Date de publication de la demande: 16.04.2014
(73) Titulaire: A.P.C.A. (Assemblee permanente des Chambres d'Agriculture), 75008 Paris (FR)
(72) Inventeur: SAIAH, Redouan, F-76000 Rouen (FR); CASTANDET, Michel, Jean, F-76000 Rouen (FR); BESNIER, Jean-Baptiste, Dominique, F-76130 Mont Saint Aignan (FR); GATTIN, Richard, Clovis, Daniel, F-76520 Montmain (FR); LEBLANC, Nathalie, Magali, F-27790 Rosay sur Lieure (FR)
(74) Mandataire: Weber, Jean-François
(86) Numéro de dépôt international: PCT/FR2012/051308
(87) Numéro de publication internationale: WO 2012/168673

(56) Documents cités:
- EP-A2- 0 969 156
- EP-A2- 2 045 408
- DE-A1- 19 517 763
- DE-A1- 19 811 807

## Description

### DOMAINE TECHNIQUE

La présente invention se rapporte au domaine technique général des matériaux de protection, plus précisément au domaine de la construction, notamment des matériaux ayant des propriétés mécaniques de résistance, de solidité et/ou de rigidité, et des matériaux de protection tels que les matériaux présentant des propriétés isolantes, par exemple pour l'isolation thermique et/ou phonique.

La présente invention se rapporte notamment au domaine technique des matériaux de construction à base de ressources naturelles, notamment d'agro-ressources et/ou de végétaux.

La présente invention concerne également des matériaux de combustion utilisables comme combustibles et des matériaux d'emballage par exemple pour le conditionnement, à base en particulier de ressources naturelles, notamment d'agro-ressources et/ou de végétaux.

La présente invention concerne plus particulièrement un matériau de protection et/ou de combustion, notamment d'isolation thermique et/ou de protection contre des chocs ou des dégradations, comprenant au moins une matière végétale cellulosique.

La présente invention concerne également un procédé de fabrication d'un matériau de protection et/ou de combustion, notamment d'isolation thermique et/ou de protection contre des chocs ou des dégradations, à partir d'au moins une matière végétale cellulosique.

### TECHNIQUE ANTERIEURE

Il est classique d'avoir recours à des matériaux de construction particulièrement solides pour la fabrication, le renforcement et/ou l'isolation de plafonds, de murs et/ou de cloisons.

On connaît notamment les panneaux en bois ou en contreplaqué, ainsi que les revêtements à base de plâtre, qui présentent des propriétés mécaniques, notamment en termes de solidité et de rigidité, particulièrement intéressantes pour renforcer la rigidité d'un bâtiment.

Si ces matériaux présentent généralement de bonnes propriétés mécaniques, ils n'en présentent toutefois pas moins certains inconvénients, notamment en raison de leurs propriétés isolantes assez faibles.

Pour pallier à cet inconvénient, il est connu d'avoir recours à des matériaux isolants que l'on peut intercaler entre les plaques de bois et/ou de contreplaqué, par exemple de la laine de roche et/ou de la laine de verre, notamment pour l'isolation de toiture, de murs, de cloisons et/ou de planchers. On peut aussi se servir de matériaux composites qui associent des fonctions mécaniques à des fonctions isolantes, comme par exemple le Placoplatre^{®} constitué d'une couche de plâtre pressée entre deux couches de carton.

L'objectif de ces matériaux, en plus de leur fonction de résistance, est d'isoler un bâtiment en vue généralement de l'insonoriser, au moins en partie, et/ou en vue d'en réduire les pertes énergétiques ou d'en réduire les flux thermiques.

La laine de verre, qui se présente classiquement comme un matelas souple de plusieurs couches juxtaposées de fibres de verre très fines, est introduite le plus souvent entre deux cloisons d'un bâtiment en vue d'isoler ce dernier. Elle est reconnue comme étant un isolant thermique efficace avec une conductivité thermique de l'ordre de 0,035 à 0,040 W/m.K. Elle présente en outre l'intérêt d'être particulièrement résistante au feu et bon marché.

Il est par ailleurs possible, alternativement, d'utiliser la laine de roche, conditionnée généralement sous forme de plaques ou de rouleaux, en tant qu'isolant thermique et acoustique dans le domaine de la construction et du bâtiment, en particulier pour les planchers de greniers. La laine de roche est alors insérée entre des plaques rigides de matériaux susvisés.

Tout comme la laine de verre, la laine de roche présente des propriétés isolantes thermiques intéressantes avec une faible conductivité thermique de l'ordre de 0,040 W/m.K. Elle présente également un faible coût et est majoritairement réalisée avec des matériaux facilement disponibles.

Cependant, l'utilisation de ces matériaux rigides avec de la laine de verre et/ou de la laine de roche, alors même qu'elle produit certaines propriétés d'isolation intéressantes en complément des caractéristiques de résistance des matériaux rigides entre lesquels elle est insérée, n'en présente pas moins un certain nombre d'inconvénients.

En effet, la laine de verre et la laine de roche sont constituées de fibres susceptibles de devenir volatiles et d'être inhalées par le manipulateur au moment de la manipulation et de la découpe de la laine de verre ou de roche. Une telle inhalation peut parfois s'avérer toxique pour le manipulateur voire même entraîner des lésions au niveau des poumons de ce dernier. Ces poussières de laine de verre ou de laine de roche ont ainsi certaines conséquences néfastes sur la santé du manipulateur. Par conséquent, il peut être conseillé de porter un masque de protection lors de la manipulation de ces matériaux, cette dernière nécessitant en particulier des précautions particulières pour limiter la désolidarisation trop importante des fibres et la formation de poussières de fibres nocives. En outre, il convient de nettoyer le lieu de la manipulation avec des filtres absolus, en humidifiant l'air ambiant et le sol et en évitant absolument tout balayage susceptible de remettre en suspension dans l'air les fibres volatiles de ces matériaux.

De surcroît, la laine de verre, tout comme le plâtre et/ou le carton du Placoplatre^{®}, sont particulièrement sensibles à l'humidité qui peut avoir tendance à altérer leurs propriétés, notamment mécaniques et d'isolation thermique.

Par ailleurs, ces matériaux ne sont généralement pas recyclés et/ou recyclables, d'une part en raison d'un manque de réseaux organisés pour leur récupération et leur recyclage ultérieur, et d'autre part en raison de la présence de certaines substances toxiques qu'ils sont susceptibles de contenir, par exemple des résines phénoplastes dans la laine de roche, des colles dans le contreplaqué et/ou certains adjuvants dans le plâtre.

Enfin, les matériaux composites formés par la laine de verre intercalée entre des cloisons en plâtre et/ou en contreplaqué, ou le Placoplatre^{®} lui-même, peuvent subir une désolidarisation de leurs éléments constitutifs, ce qui peut poser certains inconvénients, notamment lors leur manipulation, et réduire également leurs propriétés mécaniques et isolantes. De même, il est également possible que les différentes couches de fibres de la laine de verre aient tendance à se désolidariser les unes des autres, dans certaines conditions, rendant alors la laine de verre plus difficilement manipulable. Le document DE19811807 divulgue des matériaux de protection comprenant au moins une matière végétale cellulosique et un liant d'origine végétale choisi parmi les dérivés de la cellulose et de l'amidon.

### EXPOSE DE L'INVENTION

Les objets assignés à l'invention visent par conséquent à porter remède aux différents inconvénients énumérés précédemment et à proposer un nouveau matériau de protection et/ou de combustion à base de ressources facilement disponibles, qui soit non toxique et qui présente une bonne cohésion d'ensemble.

Un autre objet de l'invention vise à proposer un nouveau matériau de protection et/ou de combustion naturel et particulièrement respectueux de l'environnement.

Un autre objet de l'invention vise à proposer un nouveau matériau de protection et/ou de combustion dont les éléments constitutifs sont bon marché et recyclables, et de préférence biodégradables.

Un autre objet de l'invention vise à proposer un nouveau matériau de protection et/ou de combustion qui présente des qualités d'isolation et de protection compatibles avec une utilisation particulièrement avantageuse dans le domaine de la construction, de l'emballage et des matériaux combustibles.

Un autre objet de l'invention vise à proposer un nouveau matériau de protection et/ou de combustion qui soit solide, sensiblement rigide et difficilement cassable.

Un autre objet de l'invention vise à proposer un nouveau matériau de protection et/ou de combustion utilisable dans le domaine de la construction et/ou de l'emballage et/ou du rangement et/ou de la combustion.

Un autre objet de l'invention vise à proposer un nouveau procédé de fabrication d'un matériau de protection et/ou de combustion permettant d'obtenir de manière simple et bon marché un matériau de protection et/ou de combustion non toxique et présentant une bonne cohésion d'ensemble.

Un autre objet de l'invention vise à proposer un nouveau procédé de fabrication d'un matériau de protection et/ou de combustion comprenant des étapes de réalisation faciles et rapides à mettre en œuvre.

Un autre objet de l'invention vise à proposer un nouveau procédé de fabrication d'un matériau de protection et/ou de combustion qui soit fiable et reproductible.

Un autre objet de l'invention vise à proposer un nouveau procédé de fabrication d'un matériau de protection et/ou de combustion permettant l'obtention d'un matériau présentant une excellente tenue de ses éléments constitutifs ainsi que des propriétés mécaniques et d'isolation particulièrement sûres.

Les objets assignés à l'invention sont atteints à l'aide d'un matériau de protection et/ou de combustion, notamment d'isolation thermique et/ou de protection contre des chocs ou des dégradations, comprenant au moins une matière végétale cellulosique, caractérisé en ce qu'il comprend au moins un agent liant d'origine végétale, à l'état naturel, n'ayant subi aucune modification ou transformation chimique, pour retenir ladite matière végétale cellulosique dans ledit matériau par l'établissement de liaisons chimiques entre ledit agent liant et ladite matière végétale cellulosique, le matériau comprenant une quantité massique d'agent liant comprise entre 15 et 95%, lesdites liaisons chimiques étant obtenues lors d'une étape de compression à une température au moins égale à 30°C, et en ce qu'il présente une structure sensiblement homogène.

Les objets assignés à l'invention sont également atteints à l'aide d'un procédé de fabrication d'un matériau de protection et/ou de combustion, notamment d'isolation thermique et/ou de protection contre des chocs ou des dégradations, à partir d'au moins une matière végétale cellulosique, caractérisé en ce que l'on mélange ladite matière végétale cellulosique avec au moins un agent liant d'origine végétale à l'état naturel , n'ayant subi aucune modification ou transformation chimique, pour obtenir un mélange, le matériau comprenant une quantité massique d'agent liant comprise entre 15 et 95%, et en ce que l'on compresse ledit mélange à une température au moins égale à 30°C, pour établir des liaisons chimiques entre ledit agent liant et ladite matière végétale cellulosique, afin de retenir cette dernière dans ledit matériau.

### DESCRIPTIF SOMMAIRE DES DESSINS

D'autres objets et avantages de l'invention apparaîtront plus en détails à la lecture de la description qui suit, ainsi qu'à l'aide des dessins annexés, donnés à titre purement illustratif et non limitatif, dans lesquels :
- La figure 1 illustre, selon une vue schématique de face, une machine de fabrication du matériau de protection et/ou de combustion sous forme d'une plaque conforme à la présente invention.
- La figure 2 illustre, selon une vue schématique de dessus, un moule de la machine de fabrication du matériau de protection et/ou de combustion illustrée à la figure 1, en position ouverte.
- La figure 3 illustre, selon une vue schématique de dessus, le moule de la machine de fabrication de la figure 2, en position fermée.
- La figure 4 illustre, selon une vue schématique en perspective de profil, un matériau de protection et/ou de combustion sous forme d'une plaque sensiblement rigide, conforme à la présente invention.
- La figure 5 illustre, selon une vue en perspective de profil, un matériau de protection et/ou de combustion sous forme de plaque, conforme à un mode de réalisation préférentiel dans lequel il est associé à un matériau d'isolation décrit dans la demande de brevet français FR-09 58709 déposée le 07/12/2009 au nom de l'A.P.C.A.

### MEILLEURE MANIERE DE REALISER L'INVENTION

La présente invention concerne un matériau de protection et/ou de combustion 1, notamment d'isolation thermique et/ou de protection contre des chocs ou des dégradations.

Dans un premier mode de réalisation avantageux, il s'agit d'un matériau de construction 1 sensiblement rigide et présentant des propriétés mécaniques de résistance et de rigidité compatibles avec une utilisation pour la fabrication de bâtiments, par exemple de murs, de sols et/ou de plafonds. Dans ce premier mode de réalisation préféré, le matériau 1 de l'invention se présente préférentiellement sous forme d'une plaque sensiblement rigide 10 qui remplit des fonctions identiques à celle d'une plaque réalisée en matériau rigide, tel que du Placoplatre^{®} ou du contreplaqué.

Alternativement ou de manière complémentaire au premier mode de réalisation, le matériau de construction 1 de l'invention se présente sous forme d'un matériau 1 isolant utilisé par exemple dans le bâtiment pour protéger et isoler des murs, plafonds, sols, cloisons et/ou planchers, contre le bruit, l'eau, l'air et/ou les variations de températures, cette liste n'étant pas exhaustive, c'est-à-dire un matériau 1 destiné par exemple à limiter sa traversée par différents éléments, notamment par le bruit, la chaleur ou le froid.

De préférence, le matériau protection et/ou de combustion 1 de la présente invention constitue, dans ce deuxième mode de réalisation, un matériau de construction conçu pour l'isolation thermique des bâtiments. Le matériau 1 permet ainsi avantageusement de limiter voire d'éviter la diffusion des variations de températures, notamment à travers un mur ou une cloison qui le comprend. Il confère également de préférence une protection mécanique aux murs ou cloisons dans lesquels il est disposé. Le matériau protection et/ou de combustion 1 présente également avantageusement certaines propriétés d'isolation phonique, en limitant la diffusion des sons. Il est par ailleurs envisageable que le matériau 1 constitue un matériau isolant sous vide utilisable notamment dans les domaines de la construction et/ou de l'aéronautique, en remplacement par exemple des matériaux sous vide à base de fumée de silice.

Dans un troisième mode de réalisation avantageux, le matériau 1 de l'invention constitue un matériau d'emballage et/ou de calage, c'est-à-dire un matériau utilisé pour emballer des objets et/ou pour protéger des objets fragiles disposés dans un emballage. Il permet avantageusement de protéger lesdits objets contre des chocs, par exemple des coups, ou contre des dégradations telles que l'humidité ou la poussière. Alternativement, il est également possible que le matériau d'emballage constitue un matériau d'emballage thermique garantissant une isolation thermique à un objet, un tel matériau d'isolation thermique pouvant être utilisé par exemple pour la fabrication d'un récipient culinaire dont le contenu nécessite une protection thermique (cf. thermos).

Dans un quatrième mode de réalisation préféré, le matériau de protection et/ou de combustion 1 constitue un matériau de recouvrement protecteur conçu pour être utilisé dans le domaine des classeurs de rangement. Dans ce cas, le matériau 1 de l'invention est utilisé, de préférence, principalement pour la réalisation des pochettes sensiblement solides conçues pour la protection et le classement de documents.

Dans un cinquième mode de réalisation, le matériau de protection et/ou de combustion 1 constitue préférentiellement un matériau de chauffage destiné à être utilisé en tant que combustible. Dans ce dernier cas, le matériau 1 de l'invention prend avantageusement la forme d'une brique, d'une bûche ou d'une bûchette de chauffage, ou d'un simple cylindre ou parallélépipède, par exemple de la forme d'un morceau de charbon, destiné à être enflammé et utilisé pour le chauffage ou la cuisson des aliments, par exemple pour l'utilisation d'un barbecue, d'une cheminée ou d'une chaudière.

Dans la suite de la description, essentiellement pour des raisons de concision et de clarté, on s'attachera à décrire de préférence un matériau de construction 1 conforme au premier mode de réalisation, étant entendu que cette description est applicable à tous les autres modes de réalisation susvisés.

Le matériau 1 de l'invention comprend au moins une matière végétale cellulosique c'est-à-dire une matière, un matériau ou un mélange de substances, contenu(e) dans un végétal ou extrait(e) de ce dernier. De préférence, ladite au moins une matière végétale cellulosique comprend des fibres, c'est-à-dire des composés et/ou substances présentant une structure fibreuse et d'origine végétale.

Dans un mode de réalisation avantageux, le matériau 1 se présente sous forme d'une plaque 10 ou d'un matelas fibreux 11 dont la souplesse varie en fonction de la nature, de la longueur et de la granulométrie de la matière végétale cellulosique, notamment des fibres, qu'il comprend.

De manière préférée, lesdites fibres sont choisies parmi au moins l'une des fibres végétales suivantes : fibre de coton, fibre de lin, fibre de chanvre, fibre de roseau, fibre de tournesol, fibre de bois, fibre de sisal ou fibre de coco. La fibre est donc préférentiellement issue de fibres libériennes dont font partie notamment les fibres de coton, de chanvre, de lin, de sisal, de kénaf, de ramie, d'agave, d'alfa, d'abaca ou de jute, cette liste n'étant pas exhaustive. La fibre libérienne est une fibre végétale connue depuis l'antiquité, contenue dans l'écorce des souches de plusieurs plantes. La composition chimique de la fibre libérienne est faite en partie de cellulose, d'hémicelluloses, de lignine de résines, de pectine et d'eau. La fibre libérienne est souvent obtenue par friction, craquage et sérançage, et est remarquable par sa résistance, sa force et sa flexibilité. La fibre comprend par ailleurs alternativement par exemple une écorce d'un végétal, par exemple une écorce de tournesol, ou de la sciure de bois.

La matière végétale cellulosique de l'invention comprend, dans un autre mode de réalisation, des étoupes d'origine industrielle, par exemple des étoupes de fibres de chanvre et/ou de lin issues de l'opération de défibrage réalisée dans l'industrie textile. La matière végétale cellulosique peut également provenir de fibres de cellulose recyclée, qui est par exemple sous forme de fibres de coton recyclé ou extraite de papier, de journaux ou de boîte à oeufs en carton recyclable, notamment pour la fabrication d'un matériau pour classeurs.

Alternativement, il est également possible que la matière végétale cellulosique provienne de la partie centrale d'une tige d'un végétal dite « *moelle* », par exemple de la moelle de Sorgho, de sureau et/ou de tournesol, c'est-à-dire qu'elles soient issues de la matière végétale cellulosique. Il est également envisageable d'utiliser avantageusement une fibre extraite du liège comme source de fibres.

Il est parfaitement envisageable que le matériau 1 comprenne plusieurs matières cellulosiques d'origine végétale et de nature différente, par exemple un mélange de fibres avec de la moelle d'au moins un végétal, ou un mélange de plusieurs types de fibres. De préférence, lesdites fibres, et plus généralement les matières végétales cellulosiques, sont identiques ou non entre elles, et ledit matériau 1 comprend soit qu'un type de fibres naturelles dans toute son épaisseur soit un mélange de plusieurs fibres choisies parmi celles susvisées.

Le matériau 1 est préférentiellement fabriqué à partir d'au moins une agro-ressource comprenant ladite matière végétale cellulosique, de préférence à base de fibres, par exemple une ressource naturellement disponible ou issue d'un coproduit industriel.

Ces fibres d'origine naturelle présentent toutes des qualités pour la construction et/ou la combustion, en particulier des propriétés isolantes, notamment thermiquement, et/ou de rigidité, reconnues et sont en outre choisies en fonction des propriétés particulières additionnelles attendues pour le matériau 1, en particulier pour son imputrescibilité, sa rigidité et sa résistance. Il est à noter par exemple que les fibres de chanvre résistent mieux à la putréfaction que les fibres de lin ou de coton, et que les fibres de chanvre et de tournesol sont plus rigides que celles de coton.

Ces matières végétales cellulosiques naturelles présentent en outre l'intérêt d'être particulièrement disponibles, bon marché et facilement accessibles. En particulier, certaines d'entre elles, notamment les fibres de coton, proviennent de déchets ou de coproduits non valorisables issus de certaines industries textiles. Les fibres de tournesol directement récupérées dans les champs présentent, quant à elles, l'intérêt d'être très facilement récupérables et de valoriser un sous-produit classique de l'agriculture. Le matériau 1 permet donc avantageusement de valoriser des fibres parfois difficilement réutilisables. En outre, certaines fibres, en particulier de cellulose, sont extraites de journaux, de papiers et/ou de boîtes de conditionnement recyclable, par exemple de boîtes à oeufs en carton.

Il est également parfaitement envisageable, sans sortir du cadre de la présente invention, que le matériau comprenne un mélange d'une ou plusieurs des matières cellulosiques végétales, par exemple des fibres ou de la moelle de végétal susvisées, de taille et de nature différente, voire d'autres fibres/moelle de végétal non précisées ci-avant.

De manière préférée, lesdites fibres présentent chacune une longueur comprise entre sensiblement 10 µm et 1 m, de préférence entre sensiblement 500 µm et 1 cm, de préférence entre sensiblement 1 mm et 5 mm, de manière préférée égale à sensiblement 2 mm. En outre, lesdites fibres présentent avantageusement chacune une largeur comprise entre sensiblement 2 µm et 10 cm, de préférence comprise entre sensiblement 10 µm et 5 mm, de préférence comprise entre sensiblement 10 µm et 500 µm.

Dans un mode de réalisation particulièrement préféré, lesdites fibres présentent une granulométrie sensiblement identique à celle d'une poussière de fibre d'origine végétale, de préférence inférieure à sensiblement 500 µm, de manière avantageuse inférieure à 100 µm de largeur et à 2 mm de longueur. Ainsi, le matériau 1 de l'invention est préférentiellement composé de fibres d'origine végétale, par exemple de fibre de tournesol, de très faible granulométrie, voire sous forme de poussière. Il est également possible que le matériau 1 comprenne des matières cellulosiques végétales de granulométrie différente, par exemple des fibres sous forme de poussière mélangées à des fibres ou à de la moelle de végétal de longueur et/ou de largeur plus importante.

Le matériau 1 comprend préférentiellement une quantité massique de fibres comprise entre sensiblement 15 et 95 %, de préférence comprise entre sensiblement 20 et 70 %, de manière particulièrement avantageuse entre sensiblement 30 et 60 %, de préférence égale à sensiblement 50 %. Plus la quantité de fibres contenues dans ledit matériau 1 est importante, plus ce dernier présente avantageusement une souplesse sensiblement comparable à celle d'un matelas de laine de verre.

Le matériau 1 comprend également au moins un agent liant d'origine végétale, à l'état naturel, pour retenir ladite matière végétale cellulosique dans ledit matériau 1, en particulier en vue de maintenir lesdites fibres entre elles, par l'établissement de liaisons chimiques entre ledit agent liant et ladite matière végétale cellulosique, lesdites liaisons chimiques étant obtenues lors d'une étape de compression à une température au moins égale à 30°C. En d'autres termes, le matériau 1 comprend un agent liant pour maintenir une cohésion d'ensemble dudit matériau 1 par la création de liaisons chimiques entre différents constituants dudit matériau 1.

Au sens de l'invention, l'expression « *à l'état naturel* » signifie que ledit agent liant n'a subi aucune modification ou transformation chimique, et en particulier n'a subi, à titre illustratif et non limitatif, aucune acidification ou estérification.

De préférence, ledit au moins un agent liant comprend au moins un polymère naturel, de préférence au moins un polysaccharide, c'est-à-dire une macromolécule d'origine végétale et naturelle. Ledit agent liant est choisi avantageusement parmi au moins des composés suivantes : farine végétale, pectine, amidon ou cellulose, cette liste n'étant pas exhaustive. Lorsque l'agent liant comprend de la pectine, cette dernière peut avantageusement être extraite de la moelle d'un végétal, par exemple de la moelle de tournesol, ou être apportée dans le matériau 1 par une moelle d'un végétal. De préférence, ledit agent liant est dans son état naturel, c'est-à-dire qu'il n'a subit aucune modification ou transformation chimique. Il est préférentiellement extrait tel quel d'un végétal et n'a pas été synthétisé par voie chimique à partir d'une molécule végétale. Ainsi, ledit agent liant est, de manière avantageuse, issu, extrait ou produit à partir d'aucune substance et/ou d'aucun procédé chimique ou artificiel(le). En outre, l'agent liant ne comprend pas non plus de polymères synthétisés ou issus de la biotechnologie, par exemple produits à partir de la biomasse à l'aide ou non de micro-organismes.

De préférence, ledit agent liant est d'origine végétale et obtenu à partir d'agro-ressources. Il comprend notamment, dans un mode de réalisation préférentiel, au moins une farine d'au moins une céréale qui comprend ledit polysaccharide (par exemple l'amidon susvisé) avantageusement choisie parmi les céréales suivantes : blé, avoine, maïs, riz, orge, seigle et sorgho. Alternativement, il est parfaitement envisageable, sans sortir du cadre de la présente invention, que ledit agent liant soit composé d'un ou plusieurs amidon(s) extrait(s) d'autres ressources végétales, par exemple de la pomme de terre, du manioc, du pois lisse, de certains fruits, comme la banane, mais aussi de certaines racines de végétaux.

Ainsi, l'amidon, par exemple contenu dans des farines de céréales additionnées à la matière végétale cellulosique, notamment aux fibres, joue un rôle de liant naturel, notamment en présence d'eau, et contribue ainsi à renforcer l'intégrité et la cohésion du matériau 1 et à éviter que le matériau ne se désagrège. Alternativement, dans le cas où au moins une partie de la matière végétale cellulosique est apportée par de la moelle de sureau, de sorgho et/ou de tournesol, la pectine naturellement présente dans ces végétaux constitue le polysaccharide qui joue avantageusement un rôle d'agent liant, à l'état naturel, en permettant la cohésion entre les fibres qui contiennent de la pectine. Il est également possible, dans le cas où on utilise du liège comme source de fibres, que ce dernier comprenne de la subérine qui est un polysaccharide végétal naturel, en particulier un biopolymère végétal naturel, également apte à jouer un rôle de l'agent liant naturel.

Dans ces deux derniers cas particulièrement avantageux, le matériau 1 peut être composé uniquement de fibres et de moelle de sureau, de sorgho et/ou de tournesol, et/ou de liège, la présence de farine de céréales (ou tout autre agent liant tel que susvisé) n'étant alors pas nécessaire comme agent liant additionnel pour renforcer la tenue dudit matériau 1, la pectine et/ou la subérine présentes dans la moelle du végétal jouant alors le rôle d'agent liant.

D'ailleurs, dans un mode de réalisation particulièrement préféré, le matériau 1 comprend majoritairement, voire exclusivement, de la moelle de végétal, de préférence de la moelle de tournesol, en tant que source à la fois de matière végétale cellulosique et de pectine en tant qu'agent liant conformément à la présente invention. Un tel matériau 1 comprenant quasiment exclusivement de la moelle de végétal présente une structure alvéolaire qui lui apporte des propriétés isolantes surprenantes, par exemple pour une application comme panneau sous vide en aéronautique ou dans le bâtiment. Il est également possible, sans sortir du cadre de la présente invention, que ledit agent liant comprenne plusieurs composés, par exemple plusieurs polysaccharides qui se polymérisent entre eux, par l'établissement de liaisons chimiques entre eux, de manière à renforcer le maintien d'ensemble dudit matériau 1.

L'établissement des liaisons chimiques entre les molécules de l'agent liant entre elles, mais également entre la matière végétale cellulosique, notamment à base de fibres, et ledit agent liant permet d'éviter la séparation intempestive des fibres et de limiter ainsi la friabilité dudit matériau 1.

Le matériau 1 comprend avantageusement une quantité massique d'agent liant comprise entre sensiblement 15 et 95 %, de préférence sensiblement comprise entre 20 et 70 %, de manière particulièrement avantageuse entre sensiblement 30 et 60 %, de préférence égale à sensiblement 50 %.

En particulier, ledit agent liant présente une composition chimique suffisamment proche de celle desdites fibres, et plus globalement de la matière végétale cellulosique du matériau 1, pour établir des liaisons chimiques avec ces dernières. En effet, lesdites liaisons chimiques sont avantageusement des liaisons chimiques faibles qui s'établissent entre les groupements hydroxyles (OH) de ladite matière végétale cellulosique et/ou les groupements hydroxyles (OH) dudit agent liant.

Le matériau 1 de l'invention comprend également de l'eau, dont la quantité varie selon les quantités de fibres (ou de matière végétale cellulosique) et/ou de polysaccharides (ou d'agent liant) qu'il comprend, l'eau permettant de favoriser l'établissement des liaisons chimiques entre la matière végétale cellulosique et l'agent liant, notamment entre les fibres entre elles et entre les chaînes d'amidon entre elles ou avec lesdites fibres. De préférence, avant le séchage dudit matériau 1, au cours du procédé de fabrication décrit ci-après, la quantité d'eau du matériau 1 varie entre sensiblement 10 et 70%, de préférence entre sensiblement 20 et 40%.

De manière préférée, les fibres du matériau 1 sont tenues, retenues ou liées les unes aux autres, de manière stable grâce à la mise en place de liaisons chimiques directes entre elles et ledit agent liant, c'est-à-dire par exemple grâce à au moins une interaction chimique permettant la création de liaisons chimiques faibles entre des atomes et/ou des molécules constitutifs(ves) desdites fibres et ceux (celles) dudit agent liant. Il s'établit ainsi par exemple des liaisons hydrogènes dites également *« ponts hydrogène* » et/ou de Van der Walls entre les différentes molécules de celluloses des fibres et de l'agent liant du matériau 1. De telles liaisons chimiques garantissent la tenue des fibres entre elles, et plus généralement de toute matière végétale cellulosique du matériau 1, et évitent d'utiliser des colles chimiques et des agents compatibilisants.

Ainsi, de manière particulièrement avantageuse, la proximité chimique entre lesdits agent liant et matière végétale cellulosique (par exemple des fibres), tous d'origine végétale, garantit la mise en place de liaisons chimiques entre les différentes molécules de cellulose du matériau 1, de telle sorte qu'il présente une bonne cohésion d'ensemble et une excellente tenue intrinsèque.

Les liaisons chimiques, de préférence faibles, entre lesdites fibres et ledit agent liant s'établissent avantageusement lors de l'application d'une contrainte extérieure sur ledit matériau 1. De manière préférée, le matériau 1 est obtenu par un procédé de compression à une température au moins égale à 30°C. En d'autres termes, lesdites liaisons chimiques entre l'agent liant et ladite matière végétale cellulosique s'établissent et préférentiellement en présence d'une force de compression sensiblement comprise entre 1g/cm² à 500 kg/cm² appliquée sur un mélange comprenant les fibres et ledit agent liant, en présence de chaleur, de préférence à une température comprise entre sensiblement 90°C et 180°C.

L'effet combiné de la température et de la compression permet l'amélioration substantielle de la tenue mécanique du matériau en créant des conditions optimales pour la formation de liaisons chimiques entre l'agent liant et ladite matière végétale cellulosique. Ainsi, cela garantit la cohésion du matériau et évite qu'il puisse se désagréger.

De préférence, tel que détaillé ci-après, la force de compression et la température appliquées sur ledit matériau 1 varient en fonction de la nature de la matière végétale cellulosique, ici préférentiellement des fibres qui la composent, et de l'agent liant, de leur quantité massique respective, de leur granulométrie et de la rigidité souhaitée pour ledit matériau 1. Lesdites force de compression et température appliquées sur ledit matériau 1 permettent préférentiellement l'établissement de liaisons chimiques en nombre suffisant pour garantir la cohésion du matériau 1 et éviter notamment tout risque de détachement intempestif de ses composants, notamment de ses fibres.

En outre, le matériau 1 de l'invention présente une structure sensiblement homogène, c'est-à-dire un agencement ou une disposition intrinsèque de ses molécules constitutives sensiblement identique en tous points dudit matériau 1. La matière végétale cellulosique, notamment sous forme de fibres, et l'agent liant, qui représentent la majeure partie de constituants dudit matériau 1, sont ainsi préférentiellement régulièrement répartis dans ledit matériau 1, de telle sorte que ce dernier présente une structure globale sensiblement régulière et homogène, qui contribue à la qualité dudit matériau 1, notamment en termes de reproductibilité de ses propriétés en tout point dudit matériau 1.

Il est toutefois envisageable que ledit matériau 1 comprenne avantageusement d'autres composants, autres que lesdits fibres et agent liant susvisés, par exemple un colorant naturel, un texturant ou un adjuvant quelconque, lesquels sont d'origine végétale ou non. De préférence, tous les composants dudit matériau 1 sont d'origine naturelle, plus particulièrement d'origine végétale, et biodégradables.

De préférence, le matériau 1 comprend entre sensiblement 0,5 et 85 % d'au moins une charge minérale, de préférence d'un oxyde de titane et/ou de gypse. Le matériau 1 comprend par exemple entre sensiblement 0,5 et 8 % d'oxyde de titane pour apporter une coloration sensiblement blanche audit matériau 1, une telle coloration étant particulièrement appréciée dans les matériaux de construction. Il est également envisageable que le matériau 1 comprenne, en complément ou non du dioxyde de titane, entre sensiblement 1 et 85 %, de préférence entre sensiblement 1 et 70 % de gypse ou d'une argile. Le gypse ou l'argile renforce avantageusement le caractère ignifuge du matériau 1, de préférence en retardant l'effondrement de ce dernier en cas d'incendie.

Alternativement à, ou en complément de, ce qui précède, le matériau 1 comprend d'autre agents aux propriétés ignifugeantes, des additifs naturels ou non antifongiques et/ou antibactériens, des colorants naturels ou non, d'origine végétale ou non. Il est également parfaitement envisageable, sans sortir du cadre de la présente invention, que le matériau 1 subisse un ou plusieurs traitement(s) particulier(s), en fonction de son utilisation finale.

Le matériau 1 est toutefois avantageusement composé uniquement d'éléments naturels et respectueux de l'environnement, de telle sorte qu'il soit majoritairement recyclable. Dans un mode de réalisation particulièrement préféré, le matériau 1 est majoritairement biodégradable, de préférence intégralement biodégradable, c'est-à-dire qu'il se dégrade naturellement sans risque d'accumulation ou de pollution dans les sols et l'environnement. En effet, tous les principaux constituants du matériau 1 de l'invention sont des agro-ressources ou extraits de ces dernières, de manière à obtenir un agro-matériau biodégradable formant le matériau 1.

Avantageusement, le matériau selon l'invention a une densité supérieure à 50 kg/m³, de préférence supérieure à 80 kg/m³ voire supérieure à 270 kg/m³. En fonction de l'application souhaitée, le matériau peut avoir une densité encore plus élevée et par exemple supérieure à 600 kg/m³. Le matériau selon l'invention a donc préférentiellement une densité comprise entre 50 et 600 kg/m³, de manière plus préférentielle entre 80 et 600 kg/m³ et de manière encore plus préférentielle entre 270 et 600 kg/m³.

De préférence, le matériau 1 de l'invention présente une rigidité comprise entre sensiblement 0,001 et 100 GPa, de préférence comprise entre sensiblement 0,01 et 50 GPa, de préférence comprise entre sensiblement 0,1 et 25 GPa, de manière particulièrement avantageuse comprise entre sensiblement 5 et 15 GPa, ces valeurs de rigidité étant mesurées par exemple à partir de la valeur du Module de Young. De manière avantageuse, le matériau 1 présente une rigidité sensiblement égale à celle d'un matériau de construction rigide, par exemple au moins sensiblement égale à celle du bois ou du plâtre.

Le matériau 1 pourrait avantageusement être assimilé, en termes de solidité et de rigidité, à une paroi ou à une cloison de plâtre, par exemple de Placoplatre^{®}, utilisable en tant que matériau de construction. En effet, ledit matériau 1 présente de préférence des propriétés à la fois de solidité, de rigidité et de protection, notamment en raison de sa composition fibreuse de très faible granulométrie assimilable à une poussière de fibres qui a fait l'objet d'une compression à chaud et qui permet d'obtenir un matériau sensiblement dense et rigide, tout en ayant des propriétés isolantes.

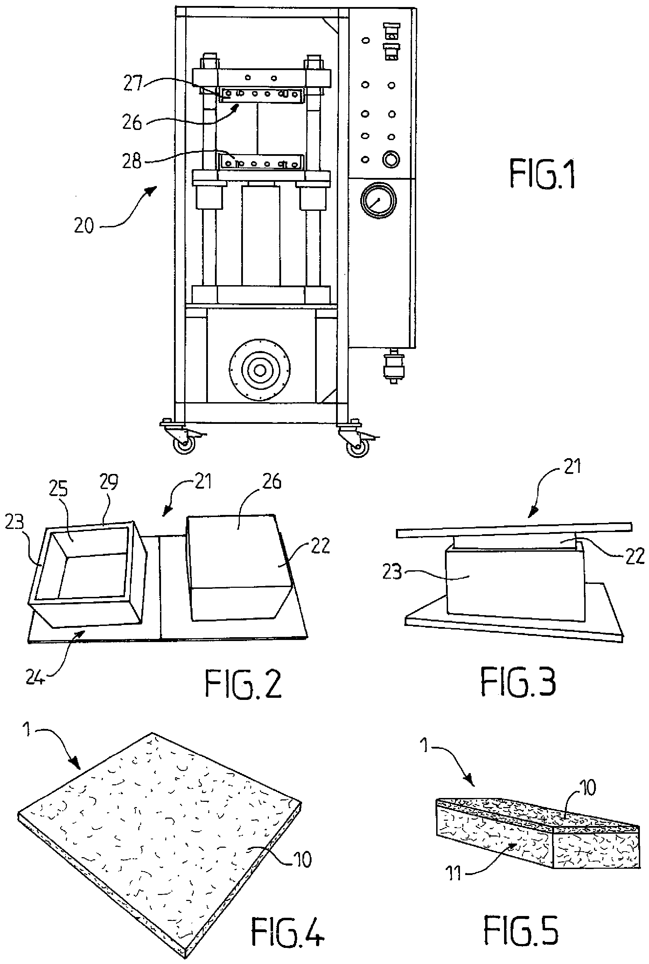

Dans un mode de réalisation préféré, le matériau 1 comprend une plaque 10 sensiblement rigide pour l'isolation thermique des bâtiments ou pour le chauffage en tant que combustible, par exemple sous la forme d'une plaque de forme sensiblement parallélépipédique dont les dimensions varient en fonction de l'utilisation du matériau 1 (cf. figures 4 et 5) et de la nature des fibres et de l'agent liant qui le composent.

De préférence, le matériau 1 présente une épaisseur comprise entre sensiblement 1 mm et 20 cm, de préférence entre sensiblement 2 et 20 mm, de préférence égale à sensiblement 5 mm ou 10 mm.

Dans le cas d'une utilisation comme matériau de construction isolant, le matériau 1 présente une forme générale sensiblement rectangulaire ou carrée, avec une épaisseur telle que susvisée. De préférence, ce matériau 1 se présente sous la forme d'une plaque 10 dont les dimensions sont sensiblement identiques à celles des plaques classiques de matériaux de construction ou d'isolant, par exemple les plaques de Placoplatre^{®} ou d'isolant de plafond (par exemple des faux plafonds). Ainsi, de manière avantageuse, la plaque 10 de l'invention a une largeur comprise entre sensiblement 30 cm et 2 m, de préférence égale à sensiblement 60 cm, 1,2 m ou 1,8 m, et une longueur comprise entre sensiblement 30 cm et 4 m, de préférence égale à sensiblement 60 cm ou 2,8 m. Il constitue ainsi par exemple des plaques de matériaux de constructions aux dimensions classiques.

Il est également parfaitement envisageable que le matériau 1 ne se présente pas sous forme de plaques, mais sous une autre forme, géométrique ou non, en particulier selon la nature et les dimensions du support sur lequel il pourrait être déposé ou fixé. Il peut d'ailleurs se présenter préférentiellement sous une forme circulaire sensiblement plate et être alors utilisé dans le domaine de l'emballage alimentaire, notamment comme disques sur lequel on dépose une pizza dans son emballage en carton.

En outre, le matériau 1 de l'invention présente une souplesse et une rigidité susceptible de varier en fonction de la quantité, des dimensions et la nature des fibres qu'il comprend, de telle sorte que sa rigidité varie entre sensiblement nulle ou faible telle que celle de la laine de verre à importante, telle que celle du Placoplatre^{®} ou d'une cloison en bois. En particulier, plus il comprend de fibres (au moins 60% en poids) et plus ces dernières sont longues (au moins plusieurs centimètres), plus il aura une souplesse compatible avec des fonctions d'isolation. Par exemple, le matériau 1 de l'invention qui comprend environ 85% de fibres, de type fibres de coton, est particulièrement souple et forme un matelas fibreux 11 souple assimilable à de la laine de verre en termes de souplesse. Au contraire, lorsque le matériau 1 comprend environ 50% de fibres (ou moins), notamment des fibres de chanvre et/ou de tournesol, il est sensiblement rigide et présente des propriétés mécaniques intéressantes dans la construction et comparables à celles d'un matériau rigide de type bois ou Placoplatre^{®}.

Dans un mode de réalisation particulièrement préféré de l'invention, le matériau 1 comprend sensiblement 50 % de fibres, par exemple à base d'écorce de tournesol, et sensiblement 50 % d'agent liant, par exemple à base de moelle de tournesol.

Il est également possible que le matériau 1 de l'invention, notamment lorsqu'il est sensiblement rigide, soit associé à un matériau comprenant au moins deux couches d'isolation à base de fibres, sensiblement souple et dont la granulométrie est différente, conformément au matériau de protection et/ de combustion décrit dans la demande de brevet français FR-09 58709 (déposée le 7/12/2009 au nom de A.P.C.A.).

De préférence, lesdites première et deuxième couches d'isolation présentent des propriétés sensiblement différentes l'une de l'autre, de telle sorte que ledit matériau 1 présente une évolution de ses propriétés entre lesdites première et deuxième couches d'isolation et entre ces dernières et la couche sensiblement rigide 10 de la présente invention. De préférence, les couches d'isolation ont des structures et des densités sensiblement différentes, le matériau d'isolation 1 présentant dès lors un gradient de densité et de structure entre ces couches d'isolation. Ces dernières forment un autre mode de réalisation avantageusement du matelas fibreux 11, tel qu'illustré à la figure 5, qui est retenu avec ladite couche rigide 10, par l'établissement de liaisons chimiques entre les fibres et autres constituants de ces couches d'isolation formant matelas fibreux 11 et la couche sensiblement rigide 10.

Ainsi le matériau 1 de l'invention présente un gradient de structure, de rigidité et de granulométrie, tel que décrit dans la demande de brevet FR-09 58709, qui contribue à ses propriétés mécaniques et isolantes.

Tel que cela est illustré à la figure 5, le matériau 1 est sensiblement plus dur et plus rigide au niveau de la couche 10 réalisée selon ce qui précède en comparaison avec les couches d'isolation formant matelas fibreux 11 et obtenues avantageusement par le procédé décrit dans la demande de brevet français FR-09 58709. En outre, dans ce mode de réalisation particulier, la couche 10 sensiblement rigide présente une épaisseur moindre par rapport au matelas fibreux 11.

De préférence, la couche 10 sensiblement rigide de la présente invention et la première couche d'isolation sont maintenues ensemble grâce à l'établissement de liaisons chimiques faibles entre leurs fibres respectives, préférentiellement associées à une agro-ressource, qu'elles comprennent, lesdites liaisons chimiques s'établissant grâce à l'application d'une force de compression, sur lesdites couche rigide 10 et la première couche d'isolation.

Il est d'ailleurs parfaitement envisageable, dans un mode de réalisation avantageux, que la couche 10 soit sensiblement confondue avec ladite deuxième couche d'isolation, de manière à former un matériau 1 comprenant une couche 10 sensiblement rigide et un matelas fibreux isolant 11 sensiblement souple. Dans ce dernier cas, le matériau de construction et/ou de combustion 1, avec sa couche externe 10 (cf. figure 5) sensiblement rigide et ses couches d'isolation formant un matelas isolant 11 présente un gradient de structure différenciée, de préférence un gradient de granulométrie, de densité et de souplesse.

Alternativement, le matériau 1 de l'invention peut être associé à une seule couche de matériau souple de nature fibreuse, laquelle peut être obtenue conformément à la présente invention ou par une autre voie de réalisation.

Dans le domaine de la construction, un tel matériau 1 constitue avantageusement une demi-cloison isolante et protectrice réalisée à partir d'agro-matériaux isolants, naturels et végétaux, notamment biodégradables. Ce matériau 1 combine ainsi à la fois des propriétés d'isolation et de solidité et représente dès lors par exemple une alternative efficace et respectueuse de l'environnement au Placoplatre^{®}, au Placoplatre^{®} polystyrène qui correspond à la combinaison de plaques de Placoplatre^{®} avec du polystyrène expansé et à la laine de verre disposée entre deux cloisons rigides, tous utilisés pour la construction.

Il est en effet possible, de manière très simple et reproductible, d'assembler deux demi-cloisons du matériau 1, les couches extérieures 10 étant disposées à l'opposé l'une de l'autre, de manière à obtenir une cloison à la fois rigide et isolante par son matelas fibreux 11 central, le matériau 1 obtenu comprenant uniquement des éléments naturels et majoritairement biodégradables, de préférence intégralement biodégradables, et une excellent tenue intrinsèque grâce aux liaisons chimiques. En outre, ce matériau présente une épaisseur sensiblement égale à celle du Placoplatre^{®} ou du Placoplatre^{®} polystyrène et ne présente aucune poussière nocive ni dégagement toxique lors de sa manipulation ou de son utilisation.

Alternativement, dans le cas d'un matériau de calage ou d'emballage comprenant le matelas fibreux 11 et la couche rigide 10 précitées, le gradient de structure du matériau 1 permet d'assurer à la fois une rigidité de calage et d'emballage tout en ayant un contact plus souple avec les objets. Dans le cas d'un matériau de combustion, la couche extérieure 10 contribue à garantir une vitesse maîtrisée de la combustion.

Ainsi, le matériau 1 de l'invention présente des propriétés à la fois en termes de rigidité, de résistance et de solidité, et à la fois en terme d'isolation. Il est réalisé à partir de ressources facilement accessibles, naturelles, végétales et préférentiellement biodégradables. Il permet notamment, de manière simple et peu onéreuse, de valoriser des déchets et/ou des sous-produits (ou coproduits) de l'industrie et de l'agriculture. De surcroît, il présente avantageusement une excellente tenue intrinsèque, sans risque de séparation ou de décrochage intempesif(ve) de ses éléments constitutifs.

La présente invention concerne par ailleurs un procédé de fabrication d'un matériau de protection et/ou de combustion, notamment d'isolation thermique et/ou de protection contre des chocs ou des dégradations, de préférence d'un matériau 1 sensiblement identique au matériau de protection et/ou de combustion 1 précédemment décrit.

Avantageusement, ce procédé constitue un procédé de fabrication d'un matériau de construction 1 conçu pour renforcer la rigidité d'un bâtiment, pour améliorer l'isolation thermique des bâtiments, d'un matériau d'emballage, d'un matériau de calage, et/ou d'un matériau de recouvrement protecteur conçu pour être utilisé dans le domaine des classeurs de rangement. Alternativement, le procédé de l'invention constitue avantageusement un procédé de fabrication d'un matériau de chauffage destiné à être utilisé en tant que combustible.

Dans la suite de la description, pour des raisons de clarté et de concision, on décrira préférentiellement un procédé de fabrication d'un matériau de construction 1, selon un premier mode de réalisation conforme à la description précédente. Il s'agit préférentiellement d'un procédé industriel, automatisé et reproductible, permettant l'obtention à grande échelle du matériau 1 de l'invention conforme à ce qui précède. Alternativement, il est également envisageable, sans sortir du cadre de la présente invention que certaines étapes de ce procédé soient manuelles et/ou non automatisées.

Le procédé de l'invention est réalisé à partir d'au moins une matière végétale cellulosique, de préférence à partir de fibres et/ou de moelle de végétaux sensiblement identiques à celles visées dans la description qui précède, par exemple de fibres issues d'un végétal, comme le chanvre, le tournesol, le roseau, le coton, le bois, cette liste n'étant pas exhaustive.

Au cours de ce dernier procédé, on mélange ladite matière végétale cellulosique avec au moins un agent liant d'origine végétale à l'état naturel pour obtenir un mélange, et on compresse ledit mélange à une température au moins égale à 30°C, pour établir des liaisons chimiques entre ledit agent liant et ladite matière végétale cellulosique, afin de retenir cette dernière dans ledit matériau 1, notamment pour maintenir les fibres, que comprend majoritairement ladite matière végétale cellulosique, entre elles.

De préférence, au cours d'une première étape procédé de l'invention, on broie tout d'abord ladite matière végétale cellulosique, comprenant avantageusement lesdites fibres, afin d'obtenir une longueur inférieure à sensiblement 10 mm, préalablement à son mélange avec ledit agent liant. Cette opération de broyage intervient préférentiellement après le mélange des fibres (et/ou de la moelle de végétal) entre elles, notamment si ces dernières sont de nature et/ou de longueur différentes, afin d'homogénéiser leur granulométrie.

La matière végétale cellulosique passe avantageusement dans un broyeur de manière à réduire sa taille, afin d'obtenir par exemple des fibres de petite taille, présentant notamment une longueur comprise entre sensiblement 10 µm et 1 m, de préférence entre sensiblement 500 µm et 1 cm, de préférence entre sensiblement 1 mm et 5 mm, de manière préférée égale à sensiblement 2 mm, et une largeur inférieure à sensiblement 5 mm, voire une poussière fibres. La granulométrie particulière des fibres permet notamment de faciliter d'une part l'obtention d'un matériau conforme à l'invention en mettant en œuvre le procédé de l'invention, et d'autre part la mise en forme ultérieure desdites fibres.

Alternativement, il est également possible d'avoir recours à des fibres déjà broyées ou présentant une très faible granulométrie, préférentiellement inférieure à 500 µm, notamment sous forme de poussières et/ou de fibres courtes, lorsqu'elles sont issues d'un procédé industriel, par exemple d'un défibrage. Dans ce dernier cas, elles peuvent, de manière préférentielle, être utilisées telles quelles dans le procédé de l'invention.

Après le broyage des fibres, on ajoute l'agent liant d'origine végétale et préférentiellement identique à celui susvisé, c'est-à-dire qu'il comprend par exemple un amidon, une pectine à l'état naturel ou apportée par une moelle d'un végétal, une cellulose et/ou une farine de céréale, cette liste n'étant pas exhaustive. Il est également envisageable d'ajouter d'autres éléments dans ledit mélange, par exemple un adjuvant ou un agent présentant des propriétés colorantes ou d'ignifugation, des propriétés antibactériennes et/ou anti-fongicides, cette liste n'étant pas exhaustive. Il est par exemple envisageable d'ajouter au mélange de l'oxyde de titane (TiO₂), du gypse et/ou de l'argile, qui peut être introduit à hauteur de quelques pourcents en poids du mélange.

Alternativement, selon un autre mode de réalisation avantageux de l'étape de mélange susvisée, il est envisageable de pulvériser ledit agent liant sur lesdites fibres.

De manière avantageuse, on hydrate ledit agent liant préalablement à son mélange avec ladite matière végétale cellulosique, notamment lesdites fibres, de préférence préalablement à l'opération de compression à chaud. Au cours de cette étape d'hydratation, on ajoute par exemple entre 20 et 50% en poids d'eau, de manière à faciliter l'étape ultérieure de compression à chaud, ou également pour favoriser la dilution de l'agent liant pour sa pulvérisation ultérieure. Alternativement, il est également envisageable, sans sortir du cadre de la présente invention, que l'on procède d'abord au mélange des fibres et/ou de ladite moelle de végétaux avec l'agent liant avant de procéder à une hydratation du mélange.

Au cours du procédé de fabrication, l'on homogénéise avantageusement ledit mélange avant de le compresser, afin d'obtenir une structure sensiblement homogène dudit matériau 1. Cette opération d'homogénéisation du mélange est réalisée postérieurement aux étapes préalables susvisées de broyage des fibres et de mélange de ces dernières avec l'agent liant. L'homogénéisation du mélange se fait par exemple dans un moule.

L'étape de compression du mélange susvisée est réalisée préférentiellement après l'étape d'homogénéisation du mélange précédente. De manière préférée, on compresse le mélange sous une force de compression comprise entre sensiblement 0,01 et 800 bars, de préférence comprise entre sensiblement 0,01 et 500 bars, avantageusement comprise entre sensiblement 0,1 et 200 bars, de manière avantageuse comprise entre sensiblement 0,5 et 20 bars, préférentiellement comprise entre sensiblement 1 et 10 bars, et avantageusement égale à sensiblement 1 ou 2 bars. Ladite compression favorise l'écrasement des fibres et la mise en contact dudit agent liant avec ces dernières, de manière à établir des liaisons chimiques, par exemple faibles, entre les groupements hydroxyles desdits fibres et agent liant.

Au cours de l'étape de compression, on applique également une certaine température, de manière à obtenir une opération de thermo-compression. En particulier, on chauffe, préférentiellement en même temps que l'on compresse, le mélange à une température comprise entre sensiblement 30°C et 250°C, de préférence entre sensiblement 70°C et 180°C, de préférence égale à sensiblement 150°C. La température de chauffe du mélange est préférentiellement adaptée à la nature des composants dudit mélange, pour éviter notamment de les dégrader et/ou d'affecter leurs propriétés.

De préférence, l'étape de compression à chaud est réalisée pendant un temps susceptible de varier, en fonction de la nature des fibres et de leur taille, entre sensiblement 1 s et 1 h, de préférence entre sensiblement 10 s et 5 mn. Cette étape de thermo-compression permet notamment la création de liaisons chimiques entre l'agent liant et la matière végétale cellulosique. Ainsi, la durée d'une telle étape peut varier notamment en fonction des différents constituants du mélange et de leur affinité à former des liaisons chimiques.

Le procédé comprend ensuite, postérieurement à l'étape de compression à chaud, une étape de séchage, par exemple à l'air libre ou dans un séchoir adapté, de manière à réduire le taux d'humidité du matériau 1.

De manière préférée, le procédé comprend enfin, postérieurement à l'étape de séchage, une étape de démoulage du matériau 1, au cours de laquelle, ledit matériau 1 séché est extrait dudit moule 21 de la thermo-presse 20 détaillée ci-après.

Dans un mode de réalisation particulièrement préféré, le procédé de l'invention constitue un procédé de fabrication d'une plaque 10 sensiblement rigide comme matériau de construction des bâtiments, ou pour l'isolation thermique des bâtiments ou pour le chauffage en tant que combustible. Une telle plaque 10 sensiblement rigide présente avantageusement les caractéristiques essentielles dudit matériau 1 telles que décrites ci-avant, notamment en termes de solidité, de rigidité et de résistance, notamment une rigidité sensiblement identique à celle d'une plaque de Placoplatre^{®}.

Le procédé de l'invention présente l'intérêt d'être rapide et simple à mettre en oeuvre, notamment par l'utilisation de matières premières facilement manipulables et par la mise en oeuvre d'étapes pratiques à réaliser pour un manipulateur.

La présente invention concerne également une machine de fabrication (non représentée) d'un matériau de protection et/ou de combustion 1, notamment d'isolation thermique et/ou de protection contre des chocs ou des dégradations, de préférence conforme audit matériau 1 qui précède, à partir d'un mélange comprenant au moins une matière végétale cellulosique d'origine végétale et au moins un agent liant d'origine végétale à l'état naturel. Ladite machine comprend une thermo-presse 20 conçue pour mettre en œuvre les principales étapes du procédé de fabrication susvisé.

Ladite thermo-presse 20, telle qu'illustrée à la figure 1, comprend un moule 21 dans lequel est introduit ledit mélange, ledit moule 21 comprenant une partie femelle 29 avec une chambre 25 pour recevoir ledit matériau 1 à compresser et une partie mâle formant un piston 22 qui vient recouvrir ladite chambre 25 afin d'appliquer une compression sur ledit mélange, en présence d'une température au moins égale à 30°C. La compression à chaud dans la thermo-presse 20 permet d'établir des liaisons chimiques entre ledit agent liant et ladite matière végétale cellulosique, laquelle est à base par exemple de fibres, afin de retenir cette dernière dans ledit matériau 1, notamment afin de maintenir lesdites fibres entre elles.

En effet, tel qu'illustré aux figures 2 et 3, le moule 21 comprend par exemple un cadre 23 et un support inférieur 24 est formé par ladite chambre 25 creuse tandis que ledit piston 22 comprend avantageusement un bloc plein 26, réalisé par exemple en aluminium, qui présente une forme sensiblement complémentaire de celle de ladite chambre 25, de manière à venir compresser ledit mélange au cours de l'étape de compression.

De manière avantageuse, ladite thermo-presse 20 comprend un dispositif d'élévation de la température 26, sous forme par exemple de plaques chauffantes 27, 28, entre lesquelles est introduit ledit matériau 1 à compresser pour élever la température du matériau 1 lors de sa compression. Alternativement, dans un autre mode de réalisation avantageux de ladite thermo-presse 20, ledit moule 21 fait partie intégrante de cette dernière, les parties femelle 29 et mâle 22 étant alors intégrées respectivement auxdites plaques chauffantes 27, 28, de manière à compresser dans le moule 21 ledit matériau 1 tout en le chauffant. En d'autres termes, on applique une température au moins égale à 30°C audit moule 21 (alternativement auxdites plaques chauffantes 27, 28), préférentiellement réalisé dans un matériau conducteur de la chaleur, de manière à porter la température dudit mélange à au moins 30°C, de préférence à 150°C. De préférence, une telle température favorise, en plus de la compression, l'établissement de liaisons chimiques entre les fibres et ledit agent liant, et donc la cohésion d'ensemble dudit matériau 1.

Ainsi, la thermo-presse 20 de l'invention permet de manière simple, rapide et pratique de mettre en oeuvre au moins certaines étapes du procédé de l'invention, de manière à obtenir le matériau 1 présentant les propriétés de rigidité et/ou d'isolation recherchées, tout en étant respectueux de l'environnement et peu onéreux à produire.

La suite de la description s'attachera à présenter quelques exemples de formulations et de tests de réalisation du matériau 1 de la présente invention, sous forme d'une plaque rigide 10 conforme à ce qui précède, et mis en œuvre dans la thermo-presse 20 décrite ci-avant conformément au procédé susvisé.

### ESSAIS DE FORMULATION

L'objectif de ces essais est de tester des exemples de formulation obtenus avec le procédé de fabrication et la thermo-presse 20 susvisés.

### Matériel et méthodes

Deux tests de formulation du matériau 1 ont été réalisés d'une part pour la réalisation d'une plaque de matériau sensiblement rigide à l'aide de la thermo-presse 20 et du procédé susvisés (TEST 1), et d'autre part pour la fabrication d'un matelas fibreux 11 avec le procédé de la présente invention (TEST 2). Ces tests ont été réalisés dans des conditions de laboratoire avec une thermo-presse 20 telle qu'illustrée à la figure 1. La plaque de matériau présente une épaisseur de 1 cm, une largeur de 15 cm et une longueur de 15 cm.

TEST 1 : Les composants du matériau sont exprimés en pourcentage en poids du matériau 1 et présentés dans le tableau 1 avant le séchage du matériau 1 et sa mise en oeuvre dans la thermo-presse 20. Dans ces exemples, l'agent liant comprend une farine de céréale, alors que les fibres sont issues d'un coproduit de l'industrie et/ou de l'agriculture, telles que par exemple des fibres de chanvre.

**Tableau 1 (avant séchage du matériau) :**

| Fibres de chanvre (%) | Farine de blé (%) | Eau (%) |
|---|---|---|
| 20,0 | 40,0 | 40,0 |
| 19,4 | 38,8 | 41,9 |
| 46,2 | 15,4 | 38,5 |

En particulier, chacune des formulations visées dans les tableaux 1 à 3 ci-dessus a fait l'objet d'un procédé conforme à ce qui précède et dans les conditions de mise en oeuvre suivantes :
- Broyage des fibres pour obtenir des fibres d'environ 2 mm de longueur,
- Mélange et hydratation selon deux méthodes :
   ∘ C1 : (eau + farine) + fibres, au cours de laquelle on hydrate d'abord l'agent liant (farine) avant de le mélanger avec les fibres,
   ∘ C2 : (fibres + farine) + eau, au cours de laquelle on mélange d'abord les fibres avec l'agent liant avant d'hydrater le mélange obtenu,
- Homogénéisation du mélange dans le moule 21 de la thermo-presse 20,
- Thermo-compression dans la thermo-presse 20 avec les conditions suivantes :
   ∘ Température : 150°C
   ∘ Pression : 1 bar,
   ∘ Durée : 45 mn.
- Séchage du matériau obtenu.

Ce procédé permet d'obtenir des plaques de matériau 1 plus ou moins rigides, selon la quantité de fibres initiale et la nature de ces dernières.

### Résultats

Le tableau 2 suivant présente la composition du matériau obtenu selon les formulations précédentes, après le séchage du matériau, en pourcentages en poids dudit matériau.

**Tableau 4 (après séchage du matériau) :**

| Fibres de chanvre (%) | Farine de blé (%) |
|---|---|
| 33,3 | 66,7 |
| 33,3 | 66,7 |
| 75,0 | 25,0 |

Ces exemples de formulation ont permis de tester la souplesse et la cohésion du matériau obtenu, selon sa teneur en fibres et la nature de ces dernières.

Une analyse visuelle et manuelle du matériau obtenu a permis de montrer notamment que plus le taux de fibres est important plus le matériau obtenu est souple. Ainsi, les formulations susvisées qui comprennent plus de 60% de fibres conduisent à un matériau présentant une certaine souplesse, qui facilite notamment sa manipulation. La souplesse dudit matériau est en outre augmentée lorsque les fibres sont plus longues.

Il a également été démontré qu'un matériau obtenu à partir de 50% de fibres et de 50% de farine de céréale présente des qualités optimales en termes de rigidité, qui sont sensiblement identiques à celles d'un Placoplatre^{®}.

TEST 2 : On réalise un matelas fibreux 11 selon le procédé de l'invention et les étapes de réalisation suivantes :
- On prépare le liant à l'aide d'une farine de blé que l'on dilue avec de l'eau, dans des proportions qui autorisent la pulvérisation du mélange eau/farine de blé dans une buse de pulvérisation,
- On pulvérise le mélange sur des fibres de végétaux, par exemple des fibres de chanvre, tout en mélangeant les fibres d'une manière constante pour homogénéiser la répartition du liant dans les fibres.

On obtient alors un matelas fibreux souple. Il est possible de faire varier le taux de farine entre 30 et 50% par rapport à la matière sèche des fibres. La variation du pourcentage d'agent liant pulvérisé sur les fibres influe sur la texture et la tenue du matelas fibreux. Plus on pulvérise d'agent liant, plus le matelas présentera une bonne cohésion d'ensemble.

### ESSAI MATERIAU ISOLANT SOUS VIDE

L'objectif de cet essai est de montrer les propriétés isolantes d'un matériau conforme à la présente invention, obtenu à partir de moelle de tournesol, notamment sous vide, utilisable en remplacement des matériaux classiques d'isolation sous vide.

### Matériel et méthodes

On fabrique une plaque de matériau rigide, de dimensions identiques à celles des matériaux réalisés dans les tests 1 et 2 susvisés, avec uniquement de la moelle de tournesol. Cette plaque de matériau est ensuite mise sous vide.

On réalise alors des mesures de conductivité thermique et de densité de la plaque de matériau obtenue (Plaque moelle) de différentes dimensions ou tailles (d), en comparaison avec une plaque de fumée de silice sous vide (Plaque fumée de silice), utilisée classiquement comme matériau isolant, dans le domaine notamment de l'aéronautique.

### Résultats

Le tableau suivant présente les résultats de conductivité thermique obtenus :

| Matériau testé | Conductivité thermique à 20°C (mW.m⁻¹.K⁻¹) | | Densité (kg.m⁻³) |
|---|---|---|---|
| | 1 bar | 2 mbar | |
| Plaque moelle (d < 1 mm) | 43.20 | 23.50 | 80 |
| Plaque moelle (d < 200 µm) | 42.00 | 21.00 | 80 |
| Plaque fumée de silice | 21.00 | 10.50 | 270 |

Ces résultats démontrent que l'application d'un vide d'air de 2 mbar permet de réduire considérablement la conductivité thermique du matériau de l'invention (Plaque moelle), ce qui est d'autant plus remarquable lorsque la taille des particules de tournesol est réduite, notamment de 1 mm à 200 µm. Cette tendance est la même que celle observée avec la fumée de silice quand elle est mise sous vide.

La structure alvéolaire de la moelle de tournesol et sa faible densité lui confèrent une morphologie et propriétés très proches de celles d'un polystyrène expansé ou d'une plaque de fumée de silice, tout en étant biodégradable et réalisé de manière simple.

Ainsi, ces tests de formulations et de réalisation du matériau 1 de l'invention ont permis de mettre en lumière l'importance des taux de fibres et d'agent liant initiaux, ainsi que la nature de ces derniers sur le matériau 1 obtenu.

Par ailleurs, le matériau selon l'invention peut avoir une densité supérieure à 50 kg/m³, préférentiellement supérieure à 80 kg/m³. Le procédé de l'invention permet également d'obtenir de manière tout aussi simple un matériau beaucoup plus dense, dont la densité est supérieure à 600 kg/m³. Le procédé de l'invention permet donc de choisir aisément la densité finale du matériau. Ainsi, le matériau selon l'invention a préférentiellement une densité comprise entre 50 et 600 kg/m³, de manière plus préférentielle entre 80 et 600 kg/m³ et de manière encore plus préférentielle entre 270 et 600 kg/m³.

En outre, il est tout à fait envisageable de faire varier d'autres paramètres pour obtenir le matériau 1 de l'invention présentant des qualités, notamment de résistance et d'isolation, différents. On peut par exemple agir également (en complément ou non de la variation de la nature des fibres, de leur granulométrie, de la nature de l'agent liant, et/ou des pourcentages de ces derniers) sur la température et la force de pression appliquées audit matériau 1. En particulier, il est possible d'avoir recours, de manière particulièrement avantageuse, à des rampes de températures et/ou de pression, ou à des isothermes de température et/ou de pression.

Il est également envisageable, dans le cadre de la présente invention, que le matériau 1 décrit ci-avant soit obtenu selon un procédé conforme à celui décrit dans la demande de brevet français FR-09 58709 (APCA, déposée le 7/12/2009) et qu'il comprenne notamment le matelas fibreux 11, tel que décrit ci-avant. Dans ce dernier cas, le matériau 1 est obtenu soit par un procédé Air-Laid^{®} comme décrit dans la demande FR-09 58709, ou un procédé semblable (Air-Lay^{®}) au cours de laquelle on créée d'abord le matelas fibreux 11, présentant un gradient de structure, et on fait adhérer, par établissement de liaisons chimiques, ce dernier à une couche sensiblement rigide 10 obtenue par le procédé de la présente invention.

### POSSIBILITE D'APPLICATION INDUSTRIELLE

L'invention trouve son application industrielle dans la conception, la fabrication et l'utilisation de matériaux de protection et/ou de combustion.

## Revendications

1. - Matériau de protection et/ou de combustion (1), notamment d'isolation thermique et/ou de protection contre des chocs ou des dégradations, comprenant au moins une matière végétale cellulosique, **caractérisé en ce qu'**il comprend au moins un agent liant d'origine végétale, à l'état naturel, n'ayant subi aucune modification ou transformation chimique, pour retenir ladite matière végétale cellulosique dans ledit matériau (1) par l'établissement de liaisons chimiques entre ledit agent liant et ladite matière végétale cellulosique, le matériau (1) comprenant une quantité massique d'agent liant comprise entre 15 et 95 %, lesdites liaisons chimiques étant obtenues lors d'une étape de compression à une température au moins égale à 30°C, et **en ce qu'**il présente une structure sensiblement homogène.

2. - Matériau de protection et/ou de combustion (1) selon la revendication 1 **caractérisé en ce que** ladite au moins une matière végétale cellulosique comprend des fibres et **en ce que** lesdites fibres présentent chacune une longueur comprise entre 10 µm et 1 m, de préférence entre 500 µm et 1 cm, de préférence entre 1 mm et 5 mm, de manière préférée égale à 2 mm.

3. - Matériau de protection et/ou de combustion (1) selon la revendication 1 ou 2 **caractérisé en ce qu'**il présente une rigidité correspondant à un module d'Young compris entre 0,01 et 50 GPa, de préférence compris entre 0,1 et 25 GPa, de manière particulièrement avantageuse compris entre 5 et 15 GPa et **en ce que** sa densité est supérieure à 50 kg/m³, de préférence supérieure à 80 kg/m³.

4. - Matériau de protection et/ou de combustion (1) selon l'une des revendications 2 ou 3 **caractérisé en ce que** lesdites fibres présentent une granulométrie inférieure à 500 µm.

5. - Matériau de protection et/ou de combustion (1) selon l'une des revendications 2 à 4 **caractérisé en ce que** lesdites fibres sont choisies parmi au moins l'une des fibres végétales suivantes : fibre de coton, fibre de lin, fibre de chanvre, fibre de roseau, fibre de tournesol, fibre de bois, fibre de sisal ou fibre de coco.

6. - Matériau de protection et/ou de combustion (1) selon l'une des revendications 1 à 5 **caractérisé en ce que** ledit au moins un agent liant comprend au moins un polymère naturel, de préférence au moins un polysaccharide.

7. - Matériau de protection et/ou de combustion (1) selon la revendication 5 **caractérisé en ce que** ledit agent liant est choisi parmi au moins un des composés suivants : farine végétale, pectine, amidon ou cellulose.

8. - Matériau de protection et/ou de combustion (1) selon l'une des revendications 1 à 6 **caractérisé en ce qu'**il comprend une quantité massique de matière végétale cellulosique et d'agent liant comprise pour chacun entre 15 et 95 %, de préférence comprise entre 20 et 70 %, de manière particulièrement avantageuse entre 30 et 60 %, de préférence égale à 50 %.

9. - Matériau de protection et/ou de combustion (1) selon l'une des revendications précédentes **caractérisé en ce qu'**il comprend une plaque (10) sensiblement rigide pour l'isolation thermique des bâtiments ou pour le chauffage en tant que combustible.

10. - Procédé de fabrication d'un matériau de protection et/ou de combustion (1), notamment d'isolation thermique et/ou de protection contre des chocs ou des dégradations, à partir d'au moins une matière végétale cellulosique, **caractérisé en ce que** l'on mélange ladite matière végétale cellulosique avec au moins un agent liant d'origine végétale à l'état naturel, n'ayant subi aucune modification ou transformation chimique, pour obtenir un mélange, le matériau (1) comprenant une quantité massique d'agent liant comprise entre 15 et 95 %, et **en ce que** l'on compresse ledit mélange à une température au moins égale à 30°C, pour établir des liaisons chimiques entre ledit agent liant et ladite matière végétale cellulosique, afin de retenir cette dernière dans ledit matériau.

11. - Procédé de fabrication d'un matériau de protection et/ou de combustion (1) selon la revendication 10 **caractérisé en ce que** l'on broie la matière végétale cellulosique, afin d'obtenir une longueur inférieure de ladite matière à 10 mm, préalablement à son mélange avec ledit agent liant.

12. -Procédé de fabrication d'un matériau de protection et/ou de combustion (1) selon la revendication 10 ou 11 **caractérisé en ce que** l'on homogénéise ledit mélange avant de le compresser, afin d'obtenir une structure sensiblement homogène dudit matériau.

13. -Procédé de fabrication d'un matériau de protection et/ou de combustion (1) selon l'une des revendications 10 à 12 **caractérisé en ce que** l'on compresse le mélange avec une force de compression comprise entre 0,1 et 200 bars, de préférence comprise entre 0,5 et 20 bars, de préférence égale à 1 ou 2 bar(s).

14. -Procédé de fabrication d'un matériau de protection et/ou de combustion (1) selon l'une des revendications 10 à 13 **caractérisé en ce que** l'on chauffe le mélange à une température comprise entre 30°C et 250°C, de préférence entre 70°C et 180°C, de préférence égale à 150°C.

15. - Procédé de fabrication d'un matériau de protection et/ou de combustion (1) selon l'une des revendications 10 à 14 **caractérisé en ce que** l'on hydrate ledit agent liant préalablement à son mélange avec ladite matière végétale cellulosique, de préférence préalablement à l'opération de compression à chaud.

## Patentansprüche

1. Schutz- und/oder Brennmaterial (1), insbesondere zur Wärmedämmung und/oder zum Schutz gegen Stöße oder Beschädigungen, das mindestens ein cellulosehaltiges pflanzliches Material umfasst, **dadurch gekennzeichnet, dass** es mindestens ein Bindemittel pflanzlichen Ursprungs umfasst, das sich im natürlichen Zustand befindet und keiner chemischen Modifikation oder Transformation unterzogen worden ist, um das cellulosehaltige pflanzliche Material in besagtem Material (1) durch die Herstellung chemischer Bindungen zwischen dem Bindemittel und dem cellulosehaltigen pflanzlichen Material zurückzuhalten, wobei das Material (1) eine Massenmenge an Bindemittel zwischen 15 und 95 % umfasst, wobei die chemischen Bindungen während eines Kompressionsschritts bei einer Temperatur von mindestens 30°C erhalten werden, und dadurch, dass es eine im Wesentlichen homogene Struktur aufweist.

2. Schutz- und/oder Brennmaterial (1) nach Anspruch 1, **dadurch gekennzeichnet, dass** das mindestens eine cellulosehaltige pflanzliche Material Fasern umfasst und dass die Fasern jeweils eine Länge zwischen 10 µm und 1 m, vorzugsweise zwischen 500 µm und 1 cm, besonders bevorzugt zwischen 1 mm und 5 mm, besonders bevorzugt gleich 2 mm, aufweisen.

3. Schutz- und/oder Brennmaterial (1) nach Anspruch 1 oder 2, **dadurch gekennzeichnet, dass** es eine Steifigkeit aufweist, die einem Young-Modul zwischen 0,01 und 50 GPa, vorzugsweise zwischen 0,1 und 25 GPa, besonders vorteilhaft zwischen 5 und 15 GPa entspricht, und dass seine Dichte größer als 50 kg/m3, vorzugsweise größer als 80 kg/m3, ist.

4. Schutz- und/oder Brennmaterial (1) nach einem der Ansprüche 2 oder 3, **dadurch gekennzeichnet, dass** die Fasern eine Korngröße von weniger als 500 µm aufweisen.

5. Schutz- und/oder Brennmaterial (1) nach einem der Ansprüche 2 bis 4, **dadurch gekennzeichnet, dass** die Fasern ausgewählt sind aus mindestens einer der folgenden pflanzlichen Fasern: Baumwollfaser, Flachsfaser, Hanffaser, Schilffaser, Sonnenblumenfaser, Holzfaser, Sisalfaser oder Kokosfaser.

6. Schutz- und/oder Brennmaterial (1) nach einem der Ansprüche 1 bis 5, **dadurch gekennzeichnet, dass** das besagte mindestens eine Bindemittel mindestens ein natürliches Polymer, vorzugsweise mindestens ein Polysaccharid, umfasst.

7. Schutz- und/oder Brennmaterial (1) nach Anspruch 5, **dadurch gekennzeichnet, dass** das besagte Bindemittel aus mindestens einer der folgenden Verbindungen ausgewählt ist: Pflanzenmehl, Pektin, Stärke oder Zellulose.

8. Schutz- und/oder Brennmaterial (1) nach einem der Ansprüche 1 bis 6, **dadurch gekennzeichnet, dass** es eine Massenmenge an cellulosehaltigem pflanzlichen Material und Bindemittel umfasst, die jeweils zwischen 15 und 95 %, vorzugsweise zwischen 20 und 70 %, besonders vorteilhaft zwischen 30 und 60 %, vorzugsweise gleich 50 %, liegt.

9. Schutz- und/oder Brennmaterial (1) nach einem der vorhergehenden Ansprüche, **dadurch gekennzeichnet, dass** es eine im Wesentlichen starre Platte (10) für die Wärmedämmung von Gebäuden oder zum Heizen als Brennstoff umfasst.

10. Verfahren zur Herstellung eines Schutz- und/oder Brennmaterials (1), insbesondere zur Wärmedämmung und/oder zum Schutz gegen Stöße oder Beschädigungen, ausgehend von mindestens einem cellulosehaltigen pflanzlichen Material, **dadurch gekennzeichnet, dass** man das cellulosehaltige pflanzliche Material mit mindestens einem Bindemittel mischt, das pflanzlichen Ursprungs im natürlichen Zustand ist, das keiner chemischen Modifikation oder Transformation unterzogen wurde, um eine Mischung zu erhalten, wobei das Material (1) eine Massenmenge an Bindemittel zwischen 15 und 95 % umfasst, und dass man die Mischung bei einer Temperatur von mindestens 30 °C komprimiert, um chemische Bindungen zwischen dem Bindemittel und dem cellulosehaltigen pflanzlichen Material herzustellen, um letzteres in dem Material zurückzuhalten.

11. Verfahren zur Herstellung eines Schutz- und/oder Brennmaterials (1) nach Anspruch 10, **dadurch gekennzeichnet, dass** das cellulosehaltige pflanzliche Material zerkleinert wird, um eine Länge des Materials von weniger als 10 mm zu erhalten, bevor es mit dem Bindemittel gemischt wird.

12. Verfahren zur Herstellung eines Schutz- und/oder Brennmaterials (1) nach Anspruch 10 oder 11, **dadurch gekennzeichnet, dass** die Mischung vor dem Verpressen homogenisiert wird, um eine im Wesentlichen homogene Struktur des Materials zu erhalten.

13. Verfahren zur Herstellung eines Schutz- und/oder Brennmaterials (1) nach einem der Ansprüche 10 bis 12, **dadurch gekennzeichnet, dass** man die Mischung mit einer Kompressionskraft zwischen 0,1 und 200 bar, vorzugsweise zwischen 0,5 und 20 bar, besonders bevorzugt gleich 1 oder 2 bar(s), komprimiert.

14. Verfahren zur Herstellung eines Schutz- und/oder Brennmaterials (1) nach einem der Ansprüche 10 bis 13, **dadurch gekennzeichnet, dass** man die Mischung auf eine Temperatur zwischen 30°C und 250°C, vorzugsweise zwischen 70°C und 180°C, besonders bevorzugt gleich 150°C, erhitzt.

15. Verfahren zur Herstellung eines Schutz- und/oder Brennmaterials (1) nach einem der Ansprüche 10 bis 14, **dadurch gekennzeichnet, dass** man das besagte Bindemittel vor seiner Mischung mit dem besagten cellulosehaltigen pflanzlichen Material hydratisiert, vorzugsweise vor dem Vorgang der Heißpressung.

## Claims

1. A protection and/or combustion material (1), in particular for thermal insulation and/or protection against impact or damage, comprising at least one cellulosic plant material, **characterized in that** it comprises at least one plant-derived binding agent, in the natural state, which has not undergone any chemical modification or transformation, to retain said cellulosic plant material in said material (1) by the establishment of chemical bonds between said binding agent and said cellulosic plant material, the material (1) comprising a binding agent mass quantity comprised between 15 and 95 %, said chemical bonds being obtained during a compression step at a temperature at least equal to 30°C, and **in that** it has a substantially homogeneous structure.

2. The protection and/or combustion material (1) according to claim 1 **characterized in that** said at least one cellulosic plant material comprises fibers and **in that** said fibers each have a length comprised between 10 µm and 1 m, preferably between 500 µm and 1 cm, preferably between 1 mm and 5 mm, most preferably equal to 2 mm.

3. The protection and/or combustion material (1) according to claim 1 or 2 **characterized in that** it has a rigidity corresponding to a Young's modulus comprised between 0.01 and 50 GPa, preferably comprised between 0.1 and 25 GPa, particularly advantageously comprised between 5 and 15 GPa and **in that** its density is greater than 50 kg/m³, preferably greater than 80 kg/m³.

4. The protection and/or combustion material (1) according to any of claims 2 or 3 **characterized in that** said fibers have a grain size less than 500 µm.

5. The protection and/or combustion material (1) according to any of claims 2 to 4 **characterized in that** said fibers are selected from at least one of the following plant fibers: cotton fiber, flax fiber, hemp fiber, reed fiber, sunflower fiber, wood fiber, sisal fiber or coconut fiber.

6. The protection and/or combustion material (1) according to any of claims 1 to 5 **characterized in that** said at least one binding agent comprises at least one natural polymer, preferably at least one polysaccharide.

7. The protection and/or combustion material (1) according to claim 5 **characterized in that** said binding agent is selected from at least one of the following compounds: vegetable flour, pectin, starch or cellulose.

8. The protection and/or combustion material (1) according to any of claims 1 to 6 **characterized in that** it comprises a mass quantity of cellulosic plant material and binding agent each comprised between 15 and 95 %, preferably comprised between 20 and 70 %, particularly advantageously between 30 and 60%, preferably equal to 50 %.

9. The protection and/or combustion material (1) according to any of the preceding claims **characterized in that** it comprises a substantially rigid plate (10) for thermal insulation of buildings or for heating as a fuel.

10. A method for manufacturing a protection and/or combustion material (1), in particular for thermal insulation and/or protection against impact or damage, from at least one cellulosic plant material, **characterized in that** said cellulosic plant material is mixed with at least one plant-derived binding agent in the natural state, which has not undergone any chemical modification or transformation, to obtain a mixture, the material (1) comprising a binding agent mass quantity comprised between 15 and 95 %, and **in that** said mixture is compressed at a temperature at least equal to 30°C, to establish chemical bonds between said binding agent and said cellulosic plant material, in order to retain the latter in said material.

11. The method for manufacturing a protection and/or combustion material (1) according to claim 10 **characterized in that** the cellulosic plant material is ground, in order to obtain a length of said material less than 10 mm, prior to mixing it with said binding agent.

12. The method for manufacturing a protection and/or combustion material (1) according to claim 10 or 11 **characterized in that** said mixture is homogenized before compressing it, in order to obtain a substantially homogeneous structure of said material.

13. The method for manufacturing a protection and/or combustion material (1) according to any of claims 10 to 12 **characterized in that** the mixture is compressed with a compression force comprised between 0.1 and 200 bars, preferably comprised between 0.5 and 20 bars, preferably equal to 1 or 2 bar(s).

14. The method for manufacturing a protection and/or combustion material (1) according to any of claims 10 to 13 **characterized in that** the mixture is heated to a temperature comprised between 30°C and 250°C, preferably between 70°C and 180°C, preferably equal to 150°C.

15. The method for manufacturing a protection and/or combustion material (1) according to any of claims 10 to 14, **characterized in that** said binding agent is hydrated prior to mixing it with said cellulosic plant material, preferably prior to the hot-compression operation.
